# EUROPÄISCHE PATENTSCHRIFT

(11) **EP 1 695 067 B1**
(45) Veröffentlichungstag und Bekanntmachung des Hinweises auf die Patenterteilung: **18.09.2013**
(21) Anmeldenummer: 04803918.4
(22) Anmeldetag: 15.12.2004
(51) Int. Cl.: G01N 21/53, A47L 15/42, D06F 39/00

(54) **Trübungssensor**
Turbidity sensor
Détecteur de turbidité

(30) Priorität: 15.12.2003 DE 10358647
(43) Veröffentlichungstag der Anmeldung: 30.08.2006
(73) Patentinhaber: emz-Hanauer GmbH & Co. KGaA, 92507 Nabburg (DE)
(72) Erfinder: SCHENKL, Johann, 92437 Pingarten (DE)
(74) Vertreter: von Hellfeld, Axel
(86) Internationale Anmeldenummer: PCT/EP2004/014301
(87) Internationale Veröffentlichungsnummer: WO 2005/057190

(56) Entgegenhaltungen:
- EP-A- 0 748 891
- DE-A1- 19 611 402
- DE-T2- 69 511 858
- US-A- 4 257 708
- US-A- 5 485 013
- US-A- 5 586 567
- US-A1- 2003 142 316

## Beschreibung

### Gebiet der Erfindung

Die vorliegende Erfindung betrifft einen Sensor zur Messung der Transmission eines in einer Waschmaschine oder einer Geschirrspülmaschine verwendeten Fluids und ein Verfahren zur Herstellung eines solchen Sensors.

### Hintergrund der Erfindung

Sensoren zur Erfassung der Trübung eines Fluids, das in einer Waschmaschine oder einer Geschirrspülmaschine verwendet wird, sind bekannt. Solche Sensoren umfassen einen Sender, der Messstrahlung durch ein Fluid, dessen Transmission bestimmt werden soll, sendet, und einen Empfänger, um auf der Messstrahlung basierende Strahlung nach dem Durchgang durch das Fluid zu empfangen. Ein Vergleich der von dem Sender ausgesendeten Messstrahlung und der von dem Empfänger empfangenen Strahlung ermöglicht eine Bestimmung der Transmission des Fluids.

Die mittels eines solchen Sensors ermittelte Transmission kann von der tatsächlichen Transmission des Fluids aus mehreren Gründen abweichen. Auf seinem Ausbreitungsweg durch das Fluid ist die Messstrahlung des Senders Streuung unterworfen. Gestreute Teile der Messstrahlung können jedoch, beispielsweise aufgrund von Mehrfachstreuung, zu dem Empfänger gelangen. Dadurch kann der Empfänger einen Anteil der Messstrahlung erhalten, der höher als der Strahlungsanteil ist, der die tatsächliche Transmission angibt.

Um Streueffekte zu reduzieren, ist es bekannt, Sender zu verwenden, die Messstrahlung mit einem Strahlengang aussenden, der in Ausbreitungsrichtung einen kleinen Querschnitt aufweist. Hierfür sind beispielsweise Laserstrahlung erzeugende Sender geeignet. Die hierfür erforderlichen Sender sind jedoch teuer. Des Weiteren müssen Sender mit einem solchen Strahlengang relativ zu dem Empfänger sehr genau ausgerichtet sein, um den gewünschten Effekt auch empfängerseitig zu erreichen.

Ferner ist es bekannt, Linsen sowohl senderseitig als auch empfängerseitig anzuordnen, um vom Sender erzeugte Strahlung zu bündeln und die Empfangscharakteristik des Empfängers auf aus Richtung des Senders einfallende Strahlung zu beschränken. Die Verwendung von Linsen erfordert angesichts der geringen Abmessungen von derartigen Sensoren präzise gefertigte Linsen und aufwändige Herstellungsverfahren, um die Linsen korrekt anzuordnen.

Um einerseits einfache, kostengünstige Sender und Empfänger verwenden zu können und um andererseits aufeinander abgestimmte Abstrahl- und Empfangscharakteristika zu erreichen, ist es bekannt, einen gemeinsamen Halter für den Sender und den Empfänger oder jeweils einen eigenen Halter für den Sender und Empfänger zu verwenden. In beiden Fällen wird eine gewünschte räumliche Ausrichtung des Senders und des Empfängers relativ zueinander erreicht, wobei beispielsweise entsprechende Aufnahmen für den Sender und dem Empfänger verwendet werden, die diese in gewünschten Positionen halten. Um zu verhindern, dass sich störende Außenbereiche, insbesondere Nebenkeulen der von dem Sender erzeugten Strahlung durch ein zu vermessendes Fluid ausbreiten und zu dem Empfänger gelangen können, können Halter eingesetzt werden, die senderseitig, baueinheitlich integriert eine Blende aufweisen. Die senderseitige Blende ist dabei so an den Haltern ausgeformt, dass sie die Hauptkeule der Senderstrahlung passieren lässt. Um zu verhindern, dass gestreute Strahlung zu dem Empfänger gelangt, kann ein Halter verwendet werden, der empfängerseitig, ebenfalls baueinheitlich integriert eine weitere Blende aufweist. Auch diese Blende ist an dem Halter so ausgeformt, dass die Empfangscharakteristik des Empfängers im Bereich der Hauptkeule vollständig benutzt wird, während periphere Empfangsbereiche abgeschattet werden.

Bei Verwendung eines oder mehrerer Haltern für den Sender und den Empfänger werden die zur Verdrahtung des Senders und des Empfängers erforderlichen Maßnahmen durchgeführt, nachdem der Sender und der Empfänger in den entsprechenden Halteraufnahmen befestigt sind. Diese Vorgehensweise verkompliziert insbesondere dann das Herstellungsverfahren, wenn der Sender und der Empfänger auf einer Platine mit SMD-Technik verbunden werden sollen.

Ein Sensor gemäß dem Oberbegriff des Ansprüche 1, 2 und 3 wird in der US 2003/0142316 A1 beschrieben.

### Aufgabe der Erfindung

Die Aufgabe der Erfindung besteht darin, einen Sensor zur Erfassung der Transmission eines in einer Waschmaschine oder einer Geschirrspülmaschine verwendeten Fluids bereitzustellen, der auf einfache und kostengünstige Weise herzustellen ist, insbesondere keine selektierten Sender und Empfänger benötigt und eine genaue Transmissionsmessung ermöglicht.

### Kurzbeschreibung der Erfindung

Zur Lösung dieser Aufgabe stellt die vorliegende Erfindung Sensoren bereit, die zur Messung der Transmission eines Fluids geeignet sind, das in einer Waschmaschine oder einer Geschirrspülmaschine verwendet wird.

Der Sensor gemäß Anspruch 1 weist einen Träger, einen Sender, der an dem Träger befestigt ist und zum Aussenden einer Senderstrahlung dient, einen Empfänger, der an dem Träger befestigt ist und zum Empfang von dem Sender erzeugter Strahlung dient, und eine Blendeneinrichtung auf. Die Blendeneinrichtung ist an dem Träger beabstandet von dem Sender angeordnet. Darunter ist insbesondere zu verstehen, dass die Blendeneinrichtung keine Funktion aufweist, die mit der Anordnung, Ausrichtung und Befestigung des Senders an dem Träger bzw. bezüglich des Empfängers im Zusammenhang steht. Die Blendeneinrichtung weist eine Senderblende auf, die im Strahlengang der Senderstrahlung angeordnet ist. Mittels der Senderblende wird auf der Grundlage der Senderstrahlung ein auf den Empfänger ausgerichteter Messstrahl erzeugt.

Die von dem Sender unabhängige Anordnung der Blendeneinrichtung ermöglicht es, einen Träger (z.B. eine für SMD-Technik geeignete Platine) zu verwenden, auf der der Sender beispielsweise in SMD-Technik vorgefertigt befestigt ist. Des Weiteren wird durch die separate Ausführung der Blendeneinrichtung die beim Stand der Technik erforderliche Vorgehensweise vermieden, den Sender relativ zu dem Empfänger genau ausgerichtet anzuordnen. Vielmehr ist es bei diesem erfindungsgemäßen Sensor lediglich erforderlich, den Sender grob auf den Empfänger auszurichten. Die eigentliche Ausrichtung bezüglich des Empfängers erfolgt nicht durch die Anordnung des Senders, sondern durch die Senderblende, die aus der Senderstrahlung, d.h. der Strahlung des Senders, den ausgerichteten Messstrahl erzeugt.

Insbesondere ist es vorgesehen, einen Sender zu verwenden, dessen Abstrahlcharakteristik im Bereich der Hauptkeule einen so großen Öffnungswinkel aufweist, dass die Senderblende die Senderstrahlung im Bereich der Hauptkeule ausblendet. Ein solcher Sender vereinfacht den Aufbau des erfindungsgemäßen Sensors, weil der Sender lediglich so an dem Träger vorgefertigt zu befestigen ist, dass wenigstens ein Teil der Strahlung der Hauptkeule des Senders den Empfänger erreichen würde, wenn keine Blende oder dergleichen zwischen dem Sender und dem Empfänger angeordnet ist.

Bei diesem erfindungsgemäßen Sensor werden die Teile des Messstrahls, die den Empfänger erreichen, zur Messung der Transmission zugrunde gelegt.

Dabei wird die Empfangscharakteristik des Empfängers im Wesentlichen unverändert genutzt, um den Messstrahl zu empfangen und daraus eine Transmission abzuleiten. Vorzugsweise wird ein Sender hoher Leistung verwendet, um ein Verhältnis von Teilen des Messstrahls, die den Empfänger ohne Streuung erreichen, und Teilen des Messstrahls, die nach Streuung den Empfänger erreichen, zu erhalten, dass die Auswirkungen von Streuungen auf Messergebnisse minimiert.

Der Sensor gemäß Anspruch 2 weist einen Träger, einen Sender, der an dem Träger befestigt ist und zum Aussenden einer Senderstrahlung dient, einen Empfänger, der an dem Träger befestigt ist und zum Empfang von dem Sender erzeugter Strahlung dient, und eine Blendeneinrichtung auf. Die Blendeneinrichtung ist an dem Träger beabstandet von dem Empfänger ordnet. Darunter ist insbesondere zu verstehen, dass die Blendeneinrichtung keine Funktion aufweist, die mit der Anordnung, Ausrichtung und Befestigung des Empfängers an dem Träger bzw. bezüglich des Senders im Zusammenhang steht. Die Blendeneinrichtung weist eine Empfängerblende auf, die im Strahlengang der Senderstrahlung angeordnet ist. Mittels der Empfängerblende wird auf der Grundlage der Senderstrahlung ein auf den Empfänger ausgerichteter Empfangsstrahl erzeugt.

Die von dem Empfänger unabhängige Anordnung der Blendeneinrichtung ermöglicht es, einen Träger (z. B. eine für SMD-Technik geeignete Platine) zu verwenden, auf der der Empfänger beispielsweise in SMD-Technik vorgefertigt befestigt ist. Des Weiteren wird durch die separate Ausführung der Blendeneinrichtung die bei Stand der Technik erforderliche Vorgehensweise vermieden, den Empfänger relativ zu dem Sender genau ausgerichtet anzuordnen. Vielmehr ist es bei diesem erfindungsgemäßen Sensor lediglich erforderlich, den Empfänger grob auf den Sender auszurichten. Die eigentliche Ausrichtung des Empfängers bezüglich des Senders erfolgt nicht durch die Anordnung des Empfängers, sondern durch die Empfängerblende, die aus der Senderstrahlung, d.h. der Strahlung des Senders, den ausgerichteten Empfangsstrahl erzeugt.

Insbesondere ist es vorgesehen, einen Empfänger zu verwenden, dessen Abstrahlcharakteristik im Bereich der Hauptkeule einen so großen Öffnungswinkel aufweist, dass die Empfängerblende die Empfangscharakteristik des Empfängers auf einen Bereich bzw. Teile innerhalb der Hauptkeule einschränkt.

Bei diesem erfindungsgemäßen Sensor werden die Teile der Senderstrahlung, die durch die Empfängerblende hindurchtreten und den Empfänger erreichen, zur Messung der Transmission zugrunde gelegt.

Der Sensor gemäß Anspruch 3 weist einen Träger, einen Sender, der an dem Träger befestigt ist und zum Aussenden einer Senderstrahlung dient, einen Empfänger, der an dem Träger befestigt ist und zum Empfang von dem Sender erzeugter Strahlung dient, und eine Blendeneinrichtung auf. Die Blendeneinrichtung ist an dem Träger beabstandet von dem Sender und beabstandet von dem Empfänger angeordnet. Darunter ist insbesondere zu verstehen, dass die Blendeneinrichtung weder eine Funktion, die mit der Anordnung, Ausrichtung und Befestigung des Senders an dem Träger bzw. bezüglich des Empfängers im Zusammenhang steht, noch eine Funktion aufweist, die mit der Anordnung, Ausrichtung und Befestigung des Empfängers an dem Träger bzw. bezüglich des Senders im Zusammenhang steht. Die Blendeneinrichtung weist eine Senderblende auf, die im Strahlengang der Senderstrahlung angeordnet ist. Mittels der Senderblende wird auf der Grundlage der Senderstrahlung ein auf den Empfänger ausgerichteter Messstrahl erzeugt. Ferner weist die Blendeneinrichtung eine Empfängerblende auf, die im Strahlengang des Messstrahls angeordnet ist. Mittels der Empfängerblende wird auf der Grundlage des Messstrahls ein auf den Empfänger ausgerichteter Empfangsstrahl erzeugt.

Bei diesem erfindungsgemäßen Sensor gelten die obigen Ausführungen bezüglich der unabhängigen Anordnung und der separaten Ausführung der Blendeneinrichtung hinsichtlich des Senders und des Empfängers sowie bezüglich der Abstrahlcharakteristik des Senders und der Empfangscharakteristik des Empfängers entsprechend.

Bei diesem erfindungsgemäßen Sensor werden die Teile des Messstrahls, die durch die Empfängerblende hindurchtreten und den Empfänger erreichen, zur Messung der Transmission zugrunde gelegt.

Dadurch wird erreicht, dass im Wesentlichen nur die Teile des Messstrahls den Empfänger erreichen, die sich ohne Streuung geradlinig von dem Sender, durch die Senderblende und die Empfängerblende zu dem Empfänger ausbreiten. Dadurch wird eine Ausrichtung der zum Messen verwendeten Strahlung des Senders auf den Empfänger erreicht. Dies ermöglicht es, einen Empfänger zu verwenden, dessen Empfangscharakteristik einen großen Öffnungswinkel (z.B. mehr als 60°) aufweist, der ohne Verwendung der Empfängerblende auch Teile des Messstrahls empfangen würde, die den Empfänger nach Streuung erreichen, so dass fehlerhafte Transmissionsmessungen entstehen können. Die erfindungsgemäße Vorgehensweise macht es demgegenüber möglich, auch solche "schlechte" Empfänger zu verwenden, ohne dabei Gefahr zu laufen, dass Transmissionsmessungen aufgrund von Streueffekten nicht die tatsächliche Transmission angeben.

Den erfindungsgemäßen Sensoren ist gemeinsam, dass eine Ausrichtung der zur Messung der Transmission verwendeten Strahlung bezüglich des Empfängers vorliegt. Beim Stand der Technik wird eine Ausrichtung des Senders und des Empfängers durch eine entsprechende Anordnung derselben relativ zueinander erreicht. Die damit verbundenen aufwändigen Herstellungsverfahren werden durch die vorliegende Erfindung vermieden. Zusätzlich zu der bekannten konstruktiven Ausrichtung von Sendern und Empfängern werden beim Stand der Technik Sender, die im Bereich der Hauptkeule seiner Abstrahlcharakteristik einen kleinen Öffnungswinkel und vorteilhafterweise kleine Nebenkeulen aufweisen, und Empfänger verwendet, die eine Empfangscharakteristik mit einer Hauptkeule geringen Öffnungswinkels aufweisen. Solche Sender und Empfänger sind teuer und müssen verglichen mit Sendern und Empfängern, deren Hauptkeulen große Öffnungswinkel aufweisen, mit noch höherem Aufwand exakt aufeinander ausgerichtet werden. Auch die Verwendung solcher Sender und Empfänger wird durch die vorliegende Erfindung vermieden. Vielmehr können bei den erfindungsgemäßen Sensoren "schlechte" Sender und Empfänger verwendet werden, die darüber hinaus noch nicht einmal genau relativ zueinander ausgerichtet werden müssen.

Ferner ist es vorgesehen, dass der Sensor einen weiteren Sender aufweist, der an der Platine, ebenfalls beabstandet von der Blendeneinrichtung befestigt ist und eine weitere Senderstrahlung aussendet.

Die Verwendung des weiteren Senders ermöglicht es, bezüglich des Senders und des weiteren Senders unterschiedlich lange Messstrecken zu realisieren, unterschiedliche Messrichtungen vorzugeben und Senderstrahlungen unterschiedlicher Wellenlänge und/oder Leistung zu verwenden.

Bei Verwendung des Senders mit Senderblende, des weiteren Senders und des Empfängers ohne Empfängerblende werden Teile des Messstrahls, d.h. Strahlung des Senders nach Durchgang durch die Senderblende, und Teile der weiteren Senderstrahlung, die jeweils den Empfänger erreichen, zur Transmissionsmessung verwendet.

Dabei kann der Empfänger Strahlung erhalten, die zwei Teile umfasst. Nämlich einen Teil, der auf seinem Ausbreitungsweg durch das Fluid geringer Streuung unterworfen ist (d.h. Teile des auf den Empfänger ausgerichteten Messstrahls, die den Empfänger erreichen) und einen Teil, der verglichen mit dem anderen Teil in größerem Umfang Streuung unterworfen ist (d.h. Teile der weiteren, nicht auf den Empfänger ausgerichteten Senderstrahlung, die den Empfänger erreichen).

Um zwischen diesen den Empfänger erreichenden Strahlungsteilen Unterscheidungen vornehmen zu können, ist es vorgesehen, den Sender und den weiteren Sender intermittierend, abwechselnd und/oder Sender unterschiedlicher Wellenlänge und/oder Leistung zu verwenden.

Bei Verwendung des Senders ohne Senderblende, des weiteren Senders und des Empfängers mit Empfängerblende werden die Teile der Senderstrahlung und die Teile der weiteren Senderstrahlung, die jeweils den Empfänger erreichen, zur Transmissionsmessung verwendet.

Insbesondere ist es bei dieser Ausführungsform vorgesehen, den Sender und den weiteren Sender intermittierend, abwechselnd zu betreiben und/oder Sender zu verwenden, die Strahlung unterschiedlicher Wellenlänge und/oder Leistung aussenden.

Bei Verwendung des Senders mit Senderblende, des weiteren Senders und des Empfängers mit Empfängerblende werden die Teile des Messstrahls, d.h. Strahlung des Senders nach Durchgang durch die Senderblende und Teile der weiteren Senderstrahlung, die jeweils durch die Empfängerblende hindurchtreten und den Empfänger erreichen, zur Transmissionsmessung verwendet.

Dabei kann der Empfänger Strahlung erhalten, die zwei Teile umfasst. Nämlich einen Teil, der auf seinem Ausbreitungsweg durch das Fluid geringer Streuung unterworfen ist (d.h. Teile des auf den Empfänger ausgerichteten Messstrahls), und einen Teil, der verglichen mit dem anderen Teil in größerem Umfang Streuung unterworfen ist (d.h. Teile der weiteren, nicht auf den Empfänger ausgerichteten Senderstrahlung). Durch die Empfängerblende wird erreicht, dass im Wesentlichen nur die Teile des Messstrahls des Senders und die Teile der weiteren Senderstrahlung des weiteren Senders den Empfänger erreichen, die sich ohne Streuung geradlinig von dem Sender bzw. dem weiteren Sender in Richtung zu dem Empfänger ausbreiten. Dadurch wird erreicht, dass die Anteile an gestreuter Strahlung, die ohne Verwendung der Empfängerblende den Empfänger erreichen können, wenigstens minimiert werden.

Des Weiteren ist es vorgesehen, auch für den weiteren Sender eine Senderblende zu verwenden, um aus der weiteren Senderstrahlung einen weiteren, auf den Empfänger gerichteten Messstrahl zu erzeugen. Hierfür weist die Blendeneinrichtung eine weitere Senderblende auf, die im Strahlengang der weiteren Senderstrahlung angeordnet ist.

Die obigen Ausführungen hinsichtlich von Ausführungsformen bei denen der Sender mit Senderblende und der Empfänger ohne Senderblende, der Sender ohne Senderblende und der Empfänger mit Empfängerblende und der Sender mit Senderblende und der Empfänger mit Empfängerblende verwendet werden, gelten bei der letzteren Ausführungsform entsprechend, wobei statt der weiteren Senderstrahlung der weitere Messstrahl heranzuziehen ist.

Bei einer weiteren bevorzugten Ausführungsform weist der Sensor einen weiteren Empfänger auf, der an dem Träger ebenfalls beabstandet von der Blendeneinrichtung befestigt ist.

Bei Ausführungsformen, bei denen der Sender mit Senderblende verwendet wird, erreichen den weiteren Empfänger die Teile des Messstrahls, die bei Ausbreitung des Messstrahls durch das Fluid reflektiert und/oder gestreut werden und folglich nicht den Empfänger erreichen. Auf der Grundlage von durch den weiteren Empfänger erhaltener Strahlung können mittels des Empfängers, auf den der Messstrahl gerichtet ist, erhaltene Transmissionsmessungen insbesondere hinsichtlich von Streu- und/oder Reflexionseffekten korrigiert werden. Des Weiteren kann der weitere Empfänger verwendet werden, um zusätzliche Aussagen über Eigenschaften des Fluids machen zu können, wie z.B. über in dem Fluid enthaltene Feststoffpartikel und Schaum.

Dies gilt auch für Ausführungsformen, bei denen der Sender ohne Senderblende und der Empfänger mit Empfängerblende verwendet wird, wo die Ausrichtung empfängerseitig erreicht wird.

Bei Ausführungsformen, bei denen zwei Sender und zwei Empfänger verwendet werden, gelten die obigen Ausführungen hinsichtlich des Empfängers für den weiteren Empfänger entsprechend. Bei Verwendung von zwei Sendern und einem Empfänger können zwei Messstrecken realisiert werden, nämlich eine erste Messstrecke zwischen dem Sender und dem Empfänger und eine zweite Messstrecke zwischen dem weiteren Sender und dem Empfänger.

Bei Verwendung von zwei Sendern und zwei Empfängern können bis zu vier Messstrecken realisiert werden, nämlich eine erste Messstrecke zwischen dem Sender und dem Empfänger, eine zweite Messstrecke zwischen dem weiteren Sender und dem weiteren Empfänger, eine dritte Messstrecke zwischen dem Sender und dem weiteren Empfänger und eine vierte Messstrecke zwischen dem weiteren Sender und dem weiteren Empfänger.

Vorzugsweise ist auch bei den Ausführungsformen, bei denen der weitere Empfänger vorhanden ist, die Blendeneinrichtung auf dem Träger so angeordnet, dass sie von dem weiteren Empfänger beabstandet ist und eine weitere Empfängerblende aufweist. Auch hier hat die Blendeneinrichtung keine Funktion, die mit der Anordnung, Ausrichtung und Befestigung des weiteren Empfängers an dem Träger bzw. bezüglich des Senders und/oder des weiteren Senders im Zusammenhang steht. Die obigen Ausführungen hinsichtlich des Empfängers mit Empfängerblende gelten für den weiteren Empfänger entsprechend.

Erfindungsgemäß weist der Träger, beispielsweise eine Platine, einen ersten Schenkel und einen zweiten Schenkel auf, die sich im Wesentlichen parallel zueinander von einer gemeinsamen Basis erstrecken. Dabei sind der Sender auf dem ersten Schenkel und der Empfänger auf dem zweiten Schenkel, dem Sender gegenüberliegend angeordnet. Die Verwendung eines solchen Trägers ermöglicht den Aufbau des Sensors in einer Form, bei der Transmissionen eines Fluids gemessen werden können, das sich zwischen den Schenkeln des Trägers befindet.

Bei Verwendung des weiteren Senders und/oder des weiteren Empfängers ist es vorgesehen, dass der weitere Sender an dem ersten Schenkel und der weitere Empfänger an dem zweiten Schenkel oder umgekehrt befestigt sind. Dabei ist es möglich, die Sender und/oder die Empfänger jeweils auf einer gemeinsamen Fläche eines Schenkels oder auf unterschiedlichen Flächen eines Schenkels anzuordnen.

Es ist ferner vorgesehen, dass die Blendeneinrichtung ebenfalls einen ersten Schenkel und einen zweiten Schenkel aufweist. Vorzugsweise ist die Blendeneinrichtung dabei so ausgeformt, dass deren erster Schenkel auf dem ersten Schenkel des Trägers und deren zweiter Schenkel auf dem zweiten Schenkel des Trägers angeordnet sind. Die Senderblende(n) und/oder die Empfängerblende(n) sind dann entsprechend der Anordnung des bzw. der Sender und des bzw. der Empfänger an den ersten und zweiten Schenkeln der Blendeneinrichtung ausgeformt.

Des Weiteren stellt die vorliegende Erfindung zur Lösung der obigen Aufgabe ein Verfahren bereit, um einen Sensor herzustellen, der zur Messung der Transmission eines Fluids in einer Waschmaschine oder einer Geschirrspülmaschine dient und einen Träger, einen ersten Sender, einen ersten Empfänger und eine Blendeneinrichtung umfasst.

Dabei wird ein Sender verwendet, der zum Aussenden einer Senderstrahlung dient. Es ist ein Empfänger vorgesehen, der zum Empfang einer Empfangsstrahlung dient. Vorzugsweise wird als Träger eine Platine verwendet, die zur elektrischen Verbindung und/Steuerung des Senders und des Empfängers dient.

Bei allen erfindungsgemäßen Verfahren werden zunächst der Sender und der Empfänger auf dem Träger befestigt. Dies kann beispielsweise durch Verlöten erfolgen. Danach wird die Blendeneinrichtung auf dem Träger angeordnet.

Bei einem erfindungsgemäßen Verfahren wird die Blendeneinrichtung so auf dem Träger angeordnet, dass sie von dem Sender beabstandet ist. Dies gilt insbesondere für eine von der Blendeneinrichtung umfasste Senderblende, die im Strahlengang der Senderstrahlung angeordnet wird, um auf der Grundlage der Senderstrahlung einen auf den Empfänger ausgerichteten Messstrahl zu erzeugen.

Bei dem weiteren erfindungsgemäßen Verfahren wird die Blendeneinrichtung so auf dem Träger angeordnet, dass sie von dem Empfänger beabstandet ist. Dies gilt insbesondere für eine von der Blendeneinrichtung umfasste Empfängerblende, die im Strahlengang der Senderstrahlung angeordnet wird, um auf der Grundlage der Senderstrahlung einen auf den Empfänger ausgerichteten Empfangsstrahl zu erzeugen.

Bei einem weiteren erfindungsgemäßen Verfahren wird die Blendeneinrichtung so auf dem Träger angeordnet, dass sie sowohl von dem Sender als auch von dem Empfänger beabstandet ist. Dies gilt insbesondere für eine von der Blendeneinrichtung umfasste Senderblende sowie für eine von der Blendeneinrichtung umfasste Empfängerblende. Dabei wird die Senderblende im Strahlengang der Senderstrahlung angeordnet, um einen Messstrahl zu erzeugen. Die Empfängerblende wird im Strahlengang des Messstrahls angeordnet, um aus den Teilen des Messstrahls, die die Empfängerblende erreichen, einen auf den Empfänger ausgerichteten Empfangsstrahl zu erzeugen.

Um eine der oben beschriebenen Ausführungsformen des erfindungsgemäßen Sensors aufzubauen, bei denen ein weiterer Sender und/oder ein weiterer Empfänger vorgesehen sind, werden der weitere Sender bzw. der weitere Empfänger ebenfalls an dem Träger befestigt, bevor die Blendeneinrichtung, die eine weitere Senderblende und/oder eine weitere Empfängerblende aufweisen kann, an dem Träger angeordnet wird.

### Kurzbeschreibung der Figuren

Bei der folgenden Beschreibung bevorzugter Ausführungsformen wird auf die beigefügten Darstellungen Bezug genommen, von denen zeigen:
- Fig. 1: eine schematische Darstellung eines erfindungsgemäßen Sensors,
- Fig. 2, 3 und 4: schematische Darstellungen einer bevorzugten Ausführungsform eines erfindungsgemäßen Sensors.

### Beschreibung bevorzugter Ausführungsformen

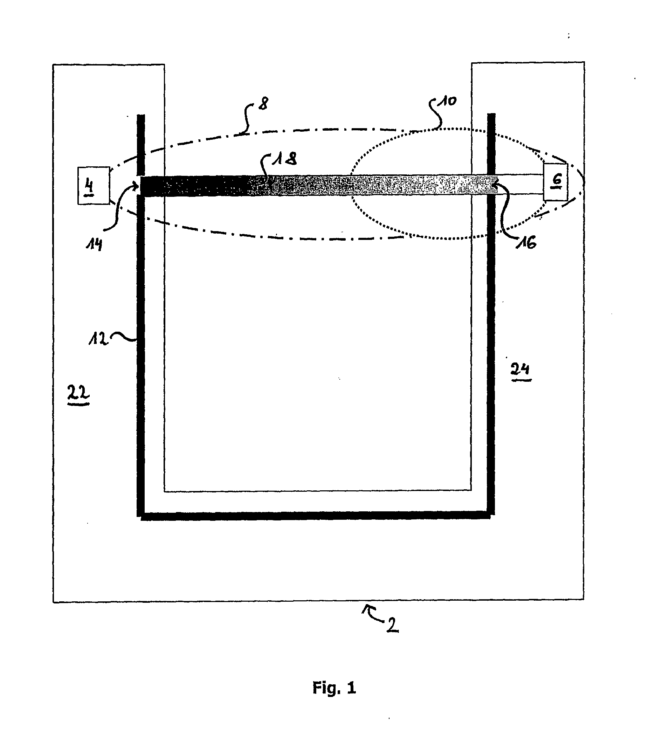

Die vereinfachte Darstellung eines erfindungsgemäßen Sensors in Fig. 1 zeigt einen Träger 2, an dem ein Sender 4 und ein Empfänger 6 befestigt sind. Als Träger 2 ist eine vorteilhafterweise für SMD-Technik ausgelegte Platine vorgesehen. Als Sender 4 und Empfänger 6 sind optische Bauelemente vorgesehen, um eine optische Messstrecke bereit zu stellen. Beispielsweise kann als Sender 4 eine LED verwendet werden, während als Empfänger 6 ein Fototransistor, eine Fotodiode oder eine Solarzelle dienen kann.

Der Sender 4 weist eine durch die gestrichelte Begrenzung 8 angegebene Abstrahlcharakteristik auf. Der Empfänger 6 hat eine durch eine gestrichelte Linie 10 angegebene Empfangscharakteristik. Die Abstrahlcharakteristik 8 und die Empfangscharakteristik 10 zeigen der Einfachheit halber lediglich die Sende- und Empfangshauptkeulen des Senders 4 bzw. des Empfängers 6; Nebenkeulen sowohl des Senders 4 als auch des Empfängers 6 sind nicht gezeigt.

An dem Träger 2 ist ferner eine Blendeneinrichtung 12 angeordnet, die sowohl von dem Sender 4 als auch von dem Empfänger 6 beabstandet und als separates Bauteil an dem Träger 2 befestigt ist. Die Blendeneinrichtung 12 weist eine Senderblende 14 und eine Empfängerblende 16 auf. Die Senderblende 14 ist im Strahlengang der Strahlung angeordnet, die von dem Sender 4 erzeugt wird.

Von der Strahlung des Senders 4 im Bereich der Hauptkeule der Abstrahlcharakteristik 8 kann ein Teil durch die Senderblende 14 passieren und sich in Richtung zu dem Empfänger 6 ausbreiten. Der durch die Senderblende 14 hindurchtretende Teil der Strahlung des Senders 4 definiert einen Meßstrahl 18, mit dem die Transmission eines Fluids 20 gemessen werden kann, das sich zwischen Schenkeln 22 und 24 des Trägers 2 befindet.

Die Senderblende 14 blendet im Gegensatz zum Stand der Technik nicht nur Nebenkeulen der Abstrahlcharakteristik des Senders 4, sondern auch Bereiche der Hauptkeule aus. Daher ist es im Gegensatz zum Stand der Technik nicht erforderlich, den Sender 4 so an dem Träger 2 zu befestigen, dass er bezüglich des Empfängers 6 optimal ausgerichtet ist. Vielmehr reicht es aus, den Sender 4 so zu positionieren, dass dessen Abstrahlcharakteristik 8 (Hauptkeule) einen Bereich umfasst, in dem die Senderblende 14 liegt. Die Ausrichtung bezüglich des Empfängers 6 wird durch die Senderblende 14 erreicht, die nur die Teile der Strahlung der Hauptkeule passieren lässt, die sich in Richtung zu dem Empfänger 6 ausbreiten. Mit anderen Worten wird durch die Senderblende 14 ein auf den Empfänger 6 gerichteter Messstrahl erzeugt. Dies ermöglicht es, als Sender 4 kostengünstige Sender zu verwenden, deren Abstrahlcharakteristik insbesondere aufgrund eines zu großen Öffnungswinkels und der daraus resultierenden Streueffekte nicht geeignet ist, eine zuverlässige Messung der Transmission des Fluids 20 zu ermöglichen.

Die Senderblende 14 und die Empfängerblende 16 sind in der Blendeneinrichtung 12 einander gegenüberliegend ausgeformt. Der Meßstrahl 18 breitet sich ausgehend von der Senderblende 14 durch das Fluid 20 zu der Empfängerblende 16 aus und tritt durch diese hindurch. Abhängig von der Transmission des Fluids 20 ist die Leistung des Messstrahls 18 im Bereich der Empfängerblende 16 gegenüber der Leistung im Bereich der Senderblende 14 verringert. Dies ist in Fig. 1 durch die verlaufende Schattierung des Messstrahls 18 veranschaulicht.

Die Teile des Messstrahls 18, die durch die Empfängerblende 16 hindurchtreten, werden von dem Empfänger 6 empfangen und zur Bestimmung der Transmission des Fluids 20 verwendet. Die Empfängerblende 16 verhindert, dass bei Ausbreitung durch das Fluid 20 gestreute Teile (nicht dargestellt) des Messstrahls 18 zu dem Empfänger 6 gelangen. Ohne die Empfängerblende 16 würde der Empfänger 6 alle Teile der Messstrahlung 18 empfangen, die in dem durch die Empfangscharakteristik 10 angegebenen Bereich fallen. Ohne die Empfängerblende 16 würden Messungen mittels des Empfängers 6 insbesondere durch Streueffekte, die bei Ausbreitung des Messstrahls 18 durch das Fluid 20 entstehen, verfälscht.

Die Empfängerblende 16 blendet im Gegensatz zum Stand der Technik nicht nur Nebenkeulen des Empfängers 6, sondern auch Bereiche der Hauptkeule des Empfängers 6 aus, die außerhalb des in Fig. 1 idealisiert dargestellten Ausbreitungswegs des Messstrahls 18 liegen. Die Empfängerblende 16 bewirkt dadurch eine Ausrichtung der Empfangscharakteristik des Empfängers 6 auf den Messstrahl 18 bzw. die Senderblende 14, die auch als virtuelle Messstrahlquelle betrachtet werden kann. Aufgrund der Empfängerblende 16 ist es im Gegensatz zum Stand der Technik nicht erforderlich, den Empfänger 6 exakt auf den Sender 4 bzw. die Senderblende 14 auszurichten. Vielmehr ermöglicht es die vorliegende Erfindung, dass der Empfänger 6 lediglich so positioniert werden muss, dass dessen Hauptkeule einen Bereich umfasst, in dem die Empfängerblende 16 liegt. Des Weiteren ermöglicht es die vorliegende Erfindung, als Empfänger 6 einen Empfänger mit einer Empfangscharakteristik, insbesondere mit einem großen Öffnungswinkel zu verwenden, der ansonsten keine zuverlässige Messung der Transmission des Fluids 20 ermöglicht, weil der Anteil an gestreuter, empfangener Strahlung im Verhältnis zu nicht gestreuter, empfangener Strahlung zu groß ist.

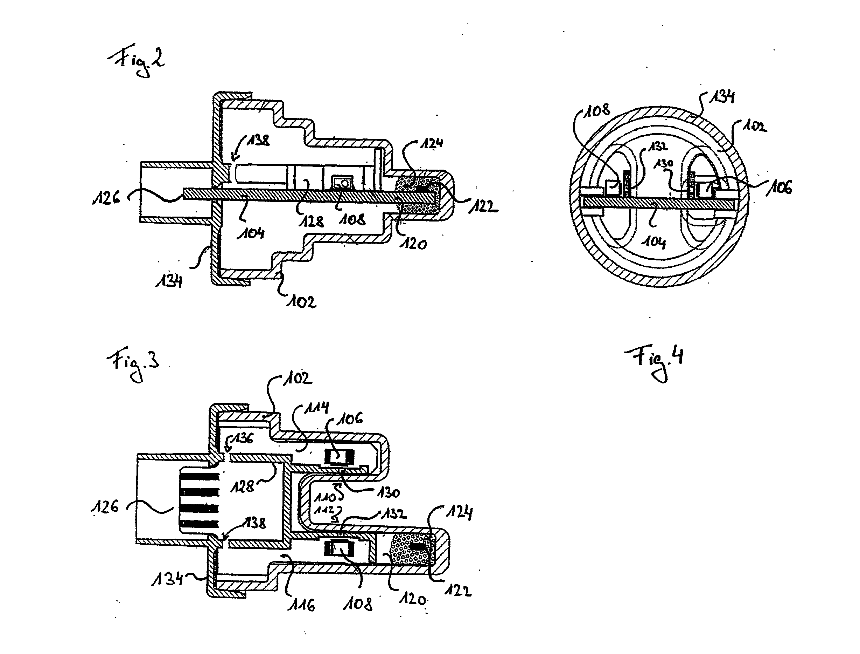

Fig. 2, 3 und 4 zeigen schematische detaillierte Darstellungen eine bevorzugten Ausführungsform des erfindungsgemäßen Sensors. Der Sensor 100 umfasst ein Gehäuse 102, in dem ein Träger in Form einer Platine 104 angeordnet ist. Auf der Platine ist ein Sender 106 und ein Empfänger 108 befestigt.

Das Gehäuse 102 ist wenigstens in den Bereichen 110 und 112 für Strahlung der Wellenlänge durchlässig, die von dem Sender 106 erzeugt wird. Vorteilhafterweise ist das gesamte Gehäuse 102 transparent und aus einem einheitlichen Kunststoff hergestellt. Die Platine 104 weist einen ersten Schenkel 114 und einen zweiten Schenkel 116 auf. Der Sender 106 ist auf dem ersten Schenkel 114 befestigt und zur Energieversorgung und Steuerung mit entsprechenden Leiterbahnen (nicht gezeigt) der Platine 104 verbunden. Der Empfänger 108 ist an dem zweiten Schenkel 116 befestigt und ebenfalls zur Stromversorgung und Steuerung mit Leiterbahnen (nicht gezeigt) der Platine 104 verbunden.

Der Schenkel 116 ist länger als der Schenkel 114 und weist an seinem freien Ende 120 einen Temperaturfühler 122 zur Erfassung der Temperatur eines in einer Waschmaschine oder Geschirrspülmaschine verwendeten Fluids auf. Um die Wärmekopplung des Temperaturfühlers 122 mit einem den Sensor 100 umgebenden Fluid zu verbessern, ist der Temperaturfühler 122 in eine Wärmeleitpaste 124 eingebettet, die das Gehäuse im Bereich des freien Endes 120 des Schenkels 116 im Wesentlichen vollständig ausfüllt.

Zum Anschluss mit elektrischen Verbindungen beispielsweise einer Waschmaschine oder einer Geschirrspülmaschine weist die Platine 104 einen als Stecker ausgeformten Anschlussbereich 126 auf. Der Anschlussbereich 126 ragt aus dem Gehäuse 102 heraus, um auf einfache Weise in eine entsprechende Geräteverbindung eingesteckt zu werden.

Auf der Platine 104 ist eine Blendenanordnung 128 angeordnet. Vorteilhafterweise wird die Blendeneinrichtung unter Verwendung von Rast-, Schnapp- und/oder Steckverbindungen auf der Platine 104 angeordnet. Die Blendeneinrichtung 128 ist sowohl von dem Sender 106 als auch von dem Empfänger 108 beabstandet auf der Platine 104 angeordnet. Dies gilt insbesondere für eine Senderblende 130 der Blendeneinrichtung 128, die dem Sender 106 benachbart, aber von diesem beabstandet angeordnet ist. Auch eine Empfängerblende 132 der Blendeneinrichtung 128 ist benachbart zu, aber beabstandet von dem Empfänger 108 vorgesehen.

Zum Verschluss des Gehäuses, um insbesondere das Eindringen von Fluid der Waschmaschine bzw. Geschirrspülmaschine und anderen Fluiden zu verhindern, ist ein Deckel 134 an dem Gehäuse 102 angebracht. Der Deckel 134 wird unter Verwendung von Schnapp- und/oder Rastverbindungen an dem Gehäuse 102 gesichert.

Bei der hier gezeigten Ausführungsform sind die Blendeneinrichtung 128 und der Deckel 134 als separate Bauteile gezeigt. Es ist aber vorgesehen, die Blendeneinrichtung 128 und den Deckel 134 baueinheitlich integriert, in Form eines einzelnen Bauteils vorzusehen. Dies ist in Fig. 2 und 3 durch die mit den Bezugszeichen 136 und 138 gekennzeichneten Bereiche angedeutet, die bei einer einstückigen Ausführung der Blendeneinrichtung 128 und des Deckels 134 geschlossen sind.

Bei den obigen Ausführungen sind die Senderblende und die Empfängerblende als im Wesentlichen gleich ausgestaltet angenommen. Insbesondere gilt dies für die Durchmesser der Senderblende und der Empfängerblende und die Materialdicke der Blendeneinrichtung in den Bereichen, die die Senderblende bzw. die Empfängerblende bilden.

Der Sender gibt Senderstrahlung ab. Die Senderblende lässt nur einen Teil der Senderstrahlung, insbesondere einen Bereich innerhalb der Hauptkeule der Senderstrahlung durch, während die übrigen Teile der Senderstrahlung, insbesondere die übrigen Bereiche der Hauptkeule ausgeblendet werden. Dadurch wird von der Senderblende ein Messstrahl erzeugt, dessen Querschnittsfläche im Bereich unmittelbar nach der Senderblende in Ausbreitungsrichtung gesehen gegenüber der Querschnittsfläche der Senderstrahlung vor der Senderblende ebenfalls in Ausbreitungsrichtung gesehen deutlich verringert ist. Bei Verwendung einer kreisförmigen Senderblende wird der Querschnitt der Senderstrahlung, insbesondere der Querschnitt der Hauptkeule der Senderstrahlung auf einen verglichen damit kleineren Querschnitt der Messstrahlung verringert.

Vorzugsweise ist die Senderblende so ausgestaltet, dass die Querschnittsfläche des Messstrahls in Ausbreitungsrichtung von der Senderblende zu dem Empfänger im Wesentlichen unverändert bleibt und Änderungen des Messstrahls im Wesentlichen auf Änderungen der Strahlungsleistung des Messstrahls auf seinem Ausbreitungsweg aufgrund der Transmissionseigenschaft eines zu vermessenden Fluids zurückzuführen sind.

Die Empfängerblende erzeugt aus den Teilen der Messstrahlung, die die Empfängerblende nach Ausbreitung durch das Fluid erreichen, einen Empfangsstrahl. Wenn es aufgrund von Verunreinigungen des zu vermessenden Fluids (verstärkt) zu Streuung und Reflexion des Messstrahls auf seinem Ausbreitungsweg durch das Fluid kommt, kann es vorteilhaft sein, eine Empfängerblende zu verwenden, deren Abmessungen, insbesondere deren Durchmesser verglichen mit den Abmessungen bzw. des Durchmessers der Senderblende kleiner sind. Dadurch können Teile des Messstrahls, die nach Streuung und/oder Reflexion den Empfänger durch die Empfängerblende erreichen können, aufgrund der kleiner dimensionierten Empfängerblende minimiert werden. Eine solche Empfängerblende kann auch vorteilhaft sein, wenn es beispielsweise aufgrund der Gestaltung der Senderblende zu einer Strahlaufweitung des Messstrahls kommt, also der Messstrahl im Bereich der Senderblende eine kleinere Querschnittsfläche in Ausbreitungsrichtung verglichen mit der Querschnittsfläche im Bereich der Empfängerblende hat.

Die von dem Sender insgesamt abgegebene Strahlungsleistung, insbesondere im Bereich der Hauptkeule der Senderstrahlung kann in Abhängigkeit davon gewählt werden, welche Strahlungsleistung der Messstrahl nach der Senderblende und/oder im Bereich der Empfängerblende haben soll. Die Strahlungsleistung des Senders kann auch in Abhängig keit davon gewählt werden, welche Strahlungsleistung der Empfangsstrahl, d.h. Teile durch die Empfängerblende tretenden Messstrahls, haben soll. Auch die Empfindlichkeit des Empfängers ist eine bei der Auslegung des Senders zu berücksichtigende Größe. Umgekehrt ist es auch vorgesehen, die Auslegung eines erfindungsgemäßen Sensors durch Wahl eines Empfängers mit einer für die jeweilige Anwendung geeigneten Empfangscharakteristik vorzunehmen. Die Auslegung eines erfindungsgemäßen Sensors kann auch durch voneinander abhängige sender- und empfängerseitige Auslegung erfolgen.

In Abhängigkeit der Abstrahlcharakteristik des Senders und/oder der Empfangscharakteristik des Empfängers sowie in Abhängigkeit der jeweiligen Anwendung insbesondere hinsichtlich der Messungen, die mit einem erfindungsgemäßen Sensor durchgeführt werden sollen, ist es ferner vorgesehen, dass die Empfängerblende verglichen mit der Senderblende größer dimensioniert ist, insbesondere einen größeren Durchmesser aufweist.

## Patentansprüche

1. Sensor zur Transmissionsmessung in einer Waschmaschine oder einer Geschirrspülmaschine, mit:
- einem Träger (2; 104), an dem ein Sender (4; 106) zum Aussenden einer Senderstrahlung (8) und ein Empfänger (6; 108) zum Empfangen von Strahlung, die von dem Sender erzeugt ist, befestigt sind, wobei der Träger (2; 104) einen ersten Schenkel (22; 114), an dem der Sender (4; 106) befestigt ist, und einen zweiten Schenkel (24; 116), an dem der Empfänger (6; 108) dem Sender (4; 106) gegenüberliegend angeordnet ist, aufweist,
**gekennzeichnet durch**
- eine separat ausgeführte und vom Sender beabstandet an dem Träger (2; 104) angeordnete Blendeneinrichtung (12; 128) mit einer Blendenöffnung (14; 130) im Strahlengang der Senderstrahlung (8), um einen auf den Empfänger (6; 108) ausgerichteten Messstrahl (18) zu erzeugen.

2. Sensor zur Transmissionsmessung in einer Waschmaschine oder einer Geschirrspülmaschine, mit:
- einem Träger (2; 104), an dem ein Sender (4; 106) zum Aussenden einer Senderstrahlung (8) und ein Empfänger (6; 108) zum Empfangen von Strahlung, die von dem Sender erzeugt ist, befestigt sind, wobei der Träger (2; 104) einen ersten Schenkel (22; 114), an dem der Sender (4; 106) befestigt ist, und einen zweiten Schenkel (24; 116), an dem der Empfänger (6; 108) dem Sender (4; 106) gegenüberliegend angeordnet ist, aufweist,
**gekennzeichnet durch**
- eine separat ausgeführte und von dem Empfänger (6; 108) beabstandet an dem Träger (2; 104) angeordnete Blendeneinrichtung (12; 128) mit einer Blendenöffnung (16; 132) im Strahlengang der Senderstrahlung (8), um einen auf den Empfänger (6; 108) ausgerichteten Empfangsstrahl zu erzeugen.

3. Sensor zur Transmissionsmessung in einer Waschmaschine oder einer Geschirrspülmaschine, mit:
- einem Träger (2; 104), an dem ein Sender (4; 106) zum Aussenden einer Senderstrahlung (8) und ein Empfänger (6; 108) zum Empfangen von Strahlung, die von dem Sender erzeugt ist, befestigt sind, wobei der Träger (2; 104) einen ersten Schenkel (22; 114), an dem der Sender (4; 106) befestigt ist, und einen zweiten Schenkel (24; 116) aufweist, an dem der Empfänger (6; 108) dem Sender (4; 106) gegenüberliegend angeordnet ist,
**gekennzeichnet durch**
- eine separat ausgeführte und vom Sender und vom Empfänger beabstandet an dem Träger (2; 104) angeordnete Blendeneinrichtung (12; 128) mit einer Blendenöffnung (14; 180) im Strahlengang der Senderstrahlung (8), um einen auf den Empfänger (6; 108) ausgerichteten Messstrahl (18) zu erzeugen, und mit einer weiteren Blendenöffnung (16; 132) im Strahlengang des Messstrahls (18), um einen auf den Empfänger (6; 108) ausgerichteten Empfangsstrahl zu erzeugen.

4. Sensor nach einem der Ansprüche 1, 2 oder 3, bei dem der Träger (2; 104) unterschiedlich lange Schenkel (114, 116) aufweist und an dem freien Ende (120) des längeren Schenkels (116) ein Temperaturfühler (122) angeordnet ist.

5. Verfahren zur Herstellung eines Sensors zur Messung der Transmission eines Fluids in einer Waschmaschine oder einer Geschirrspülmaschine mit folgenden Schritten:
- Bereitstellen eines Trägers (2; 104), an dem ein Sender (4; 106) zum Aussenden einer Senderstrahlung (8) und ein Empfänger (6; 108) zum Empfangen von Strahlung, die von dem Sender erzeugt ist, befestigt sind, wobei der Träger (2; 104) einen ersten Schenkel (22; 114), an dem der Sender (4; 106) befestigt ist, und einen zweiten Schenkel (24; 116), an dem der Empfänger (6; 108) dem Sender (4; 106) gegenüberliegend angeordnet ist, aufweist,
- Bereitstellen einer separat ausgeführten Blendeneinrichtung (12; 128) mit einer Blendenöffnung (14; 130); und
- Anordnen der Blendeneinrichtung (12; 128) auf dem Träger (2; 104) so, dass die Blendeneinrichtung von dem Sender beabstandet ist und die Blendenöffnung (14; 130) im Strahlengang der Senderstrahlung angeordnet ist, um einen auf den Empfänger (6; 108) ausgerichteten Messstrahl zu erzeugen.

6. Verfahren zur Herstellung eines Sensors zur Messung der Transmission eines Fluids in einer Waschmaschine oder einer Geschirrspülmaschine mit folgenden Schritten:
- Bereitstellen eines Trägers (2; 104), an dem ein Sender (4; 106) zum Aussenden einer Senderstrahlung (8) und ein Empfänger (6; 108) zum Empfangen von Strahlung, die von dem Sender erzeugt ist, befestigt sind, wobei der Träger (2; 104) einen ersten Schenkel (22; 114), an dem der Sender (4; 106) befestigt ist, und einen zweiten Schenkel (24; 116), an dem der Empfänger (6; 108) dem Sender (4; 106) gegenüberliegend angeordnet ist, aufweist,
- Bereitstellen einer separat ausgeführten Blendeneinrichtung (12; 128) mit einer Blendenöffnung (16; 132), und
- Anordnen der Blendeneinrichtung (12; 128) auf dem Träger (2; 104) so, dass die Blendeneinrichtung von dem Empfänger beabstandet ist und die Blendenöffnung (16; 132) im Strahlengang der Senderstrahlung (8) angeordnet ist, um einen auf den Empfänger (6; 108) ausgerichteten Empfangsstrahl zu erzeugen.

7. Verfahren zur Herstellung eines Sensors zur Messung der Transmission eines Fluids in einer Waschmaschine oder einer Geschirrspülmaschine mit folgenden Schritten:
- Bereitstellen eines Trägers (2; 104), an dem ein Sender (4; 106) zum Aussenden einer Senderstrahlung (8) und ein Empfänger (6; 108) zum Empfangen von Strahlung, die von dem Sender erzeugt ist, befestigt sind, wobei der Träger (2; 104) einen ersten Schenkel (22; 114), an dem der Sender (4; 106) befestigt ist, und einen zweiten Schenkel (24; 116) aufweist, an dem der Empfänger (6; 108) dem Sender (4; 106) gegenüberliegend angeordnet ist,
- Bereitstellen einer separat ausgeführten Blendeneinrichtung (12; 128) mit einer Blendenöffnung (14; 118) und einer weiteren Blendenöffnung (16; 128), und
- Anordnen der Blendeneinrichtung (12; 128) auf dem Träger (2; 104) so, dass die Blendeneinrichtung von dem Sender (4; 106) und dem Empfänger (6; 108) beabstandet ist, die Blendenöffnung (14; 118) im Strahlengang der Senderstrahlung angeordnet ist, um einen Messstrahl zu erzeugen, und die weitere Blendenöffnung (16; 132) im Strahlengang des Messstrahls angeordnet ist, um einen auf den Empfänger (6; 108) ausgerichteten Empfangsstrahl zu erzeugen.

## Claims

1. Sensor for transmission measurement in a washing machine or dishwasher, with:
- a carrier (2; 104) at which a transmitter (4; 106) for emitting transmitter radiation (8) and a receiver (6; 108) for receiving radiation that is generated by the transmitter are attached, wherein the carrier (2; 104) comprises a first leg (22; 114) to which the transmitter (4; 106) is attached, and a second leg (24; 116) at which the receiver (6; 108) is arranged, opposed to the transmitter (4; 106),
**characterized by**
- a diaphragm system (12; 128) that is provided separately and spaced from the transmitter at the carrier (2; 104), and comprises a diaphragm opening (14; 130) in the beam path of the transmitter radiation (8) to generate a measuring beam (18) directed onto the receiver (6; 108).

2. Sensor for transmission measurement in a washing machine or dish washer, with:
- a carrier (2; 104) to which a transmitter (4; 106) for emitting transmitter radiation (8) and a receiver (6; 108) for receiving radiation emitted by the transmitter are attached, wherein the carrier (2; 104) comprises a first leg (22; 114) to which the transmitter (104; 106) is attached, and a second leg (24; 116) at which the receiver (6; 108) is arranged opposite to the transmitter (4; 106),
**characterized by**
- a diaphragm system (12; 128) which is provided separately and spaced from the receiver (6; 108) at the carrier (2; 104), the diaphragm system comprising a diaphragm opening (6; 132) in the beam path of the transmitter radiation (8) for generating a receiver beam directed onto the receiver (6; 108).

3. Sensor for transmission measurement in a washing machine or dish washer, with:
- a carrier (2; 104) to which a transmitter (4; 106) for emitting a transmitter radiation (8) and a receiver (6; 108) for receiving radiation generated by the transmitter are connected, wherein the carrier (2; 104) comprises a first leg (22; 114), to which the transmitter (104; 106) is attached, and a second leg (24; 116), at which the receiver (6; 108) is arranged opposite to the transmitter (4; 106),
**characterized by**
- a diaphragm system (12; 128) that is provided separately and at a distance from the transmitter and the receiver at the carrier (2; 104), the diaphragm system comprising a diaphragm opening (14; 180) in the beam path of the transmitter radiation (8) for generating a measuring beam (18) directed onto the receiver (6; 108), and a further diaphragm opening (16; 132) in the beam path of the measuring beam (18) for generating a receiver beam directed onto the receiver (6; 108).

4. Sensor according to one of the claims 1, 2 or 3, wherein the carrier (2; 104) comprises legs (114, 116) having different lengths, wherein, at the free end (120) of the longer leg (116), a temperature sensor (122) is arranged.

5. Method for producing a sensor to measure the transmission of a fluid in a washing machine or a dish washer, the method comprising the following steps:
- providing a carrier (2; 104) to which are connected a transmitter (4; 106) for emitting transmitter radiation (8) and a receiver (6; 108) for receiving radiation generated by the transmitter, wherein the carrier (2; 104) comprises a first leg (22; 114) to which the transmitter (4; 106) is attached and a second leg (24; 116) at which the receiver (6; 108) is arranged opposite to the transmitter (4; 106),
- providing a separately arranged diaphragm system (12; 128) having a diaphragm opening (14; 130) and
- arranging the diaphragm system (12; 128) at the carrier (2; 104) such that the diaphragm system is spaced from the transmitter and the diaphragm opening (14; 130) is arranged in the beam path of the transmitter to generate a measuring beam directed onto the receiver (6; 108).

6. Method for producing a sensor to measure the transmission of a fluid in a washing machine or a dish washer, the method comprising the following steps:
- providing a carrier (2; 104) to which are attached a transmitter (4; 106) for emitting transmitter radiation (8) and a receiver (6; 108) for receiving radiation generated by the transmitter, wherein the carrier (2; 104) comprises a first leg (22; 114) to which the transmitter (4; 106) is attached and a second leg (24; 116), at which the receiver (6; 108) is arranged opposite to the transmitter (4; 106),
- providing a separately arranged diaphragm system (12; 128) having a diaphragm opening (16; 132), and
- arranging the diaphragm system (12; 128) at the carrier (12; 104) such that the diaphragm system is spaced from the receiver and the diaphragm opening (16; 132) is arranged in the beam path of the transmitter radiation (8) for generating a receiver beam directed onto the receiver (6; 108).

7. Method for producing a sensor to measure the transmission of a fluid in a washing machine or a dish washer, the method comprising the following steps:
- providing a carrier (2; 104) to which a transmitter (4; 106) for emitting transmitter radiation (8) and a receiver (6; 108) for receiving radiation generated by the transmitter, are attached, wherein the carrier (2; 104) comprises a first leg (22; 114) to which the transmitter (4; 106) is attached and a second leg (24; 116) at which the receiver (6; 108) is arranged opposite to the transmitter (4; 106),
- providing a diaphragm system (12; 128) arranged separately and having a diaphragm opening (14; 118) and a further diaphragm opening (16; 128), and
- arranging the diaphragm system (12; 128) at the carrier (2; 104) such that the diaphragm system is spaced from the transmitter (4; 106) and the receiver (6; 108), the diaphragm opening (14; 118) is arranged in the beam path of the transmitter radiation to generate a measuring beam, and the further diaphragm opening (16; 132) is arranged in the beam path of the measuring beam to generate a receiver beam that is directed onto the receiver (6; 108).

## Revendications

1. Capteur de mesure de transmission à l'intérieur d'une machine à laver ou d'un lave-vaisselle, comprenant :
- un support (2 ; 104), sur lequel sont fixés un émetteur (4 ; 106) destiné à émettre un rayonnement (8) et un récepteur (6 ; 108) destiné à recevoir un rayonnement généré par ledit émetteur, ledit support (2 ; 104) présentant un premier bras (22 ; 114), sur lequel est fixé l'émetteur (4 ; 106), et un deuxième bras (24 ; 116), sur lequel ledit récepteur (6 ; 108) est disposé face à l'émetteur (4 ; 106),
**caractérisé par**
- un dispositif formant diaphragme (12 ; 128) qui est réalisé séparément, disposé sur le support (2 ; 104) à distance de l'émetteur et pourvu d'une ouverture de diaphragme (14 ; 130) disposée dans la trajectoire du rayonnement (8) émis par l'émetteur pour générer un rayon de mesure (18) dirigé sur le récepteur (6 ; 108).

2. Capteur de mesure de transmission à l'intérieur d'une machine à laver ou d'un lave-vaisselle, comprenant :
- un support (2 ; 104), sur lequel sont fixés un émetteur (4 ; 106) destiné à émettre un rayonnement (8) et un récepteur (6 ; 108) destiné à recevoir un rayonnement généré par l'émetteur, le support (2 ; 104) présentant un premier bras (22 ; 114), sur lequel est fixé l'émetteur (4 ; 106), et un deuxième bras (24 ; 116), sur lequel le récepteur (6 ; 108) est disposé face à l'émetteur (4 ; 106),
**caractérisé par**
- un dispositif formant diaphragme (12 ; 128) qui est réalisé séparément, disposé sur le support (2 ; 104) à distance de l'émetteur et pourvu d'une ouverture de diaphragme (16 ; 132) disposée dans la trajectoire du rayonnement (8) émis par l'émetteur pour générer un rayon de réception dirigé sur le récepteur (6 ; 108).

3. Capteur de mesure de transmission à l'intérieur d'une machine à laver ou d'un lave-vaisselle, comprenant :
- un support (2 ; 104), sur lequel sont fixés un émetteur (4 ; 106) destiné à émettre un rayonnement (8) et un récepteur (6 ; 108) destiné à recevoir un rayonnement généré par l'émetteur, le support (2 ; 104) présentant un premier bras (22 ; 114), sur lequel est fixé l'émetteur (4 ; 106), et un deuxième bras (24 ; 116), sur lequel le récepteur (6 ; 108) est disposé face à l'émetteur (4 ; 106),
**caractérisé par**
- un dispositif formant diaphragme (12 ; 128) qui est réalisé séparément, disposé sur le support (2 ; 104) à distance de l'émetteur et du récepteur et pourvu d'une ouverture de diaphragme (14 ; 180) disposée dans la trajectoire du rayonnement (8) émis par l'émetteur pour générer un rayon de mesure (18) dirigé sur le récepteur (6 ; 108), ainsi que d'une ouverture de diaphragme supplémentaire (16 ; 132) disposée dans la trajectoire du rayon de mesure (18) pour générer un rayon de réception dirigé sur le récepteur (6 ; 108).

4. Capteur selon l'une des revendications 1, 2 ou 3, dans le cadre duquel le support présente des bras (114, 116) de longueur différente et un détecteur de température (122) est disposé à l'extrémité libre (120) du bras le plus long (116).

5. Procédé pour fabriquer un capteur de mesure de transmission d'un fluide à l'intérieur d'une machine à laver ou d'un lave-vaisselle, comportant les étapes suivantes :
- la mise à disposition d'un support (2 ; 104), sur lequel sont fixés un émetteur (4 ; 106) destiné à émettre un rayonnement (8) et un récepteur (6 ; 108) destiné à recevoir un rayonnement généré par ledit émetteur, le support (2 ; 104) présentant un premier bras (22 ; 114), sur lequel est fixé l'émetteur (4 ; 106), et un deuxième bras (24 ; 116), sur lequel le récepteur (6 ; 108) est disposé face à l'émetteur (4 ; 106),
- la mise à disposition d'un dispositif formant diaphragme (12 ; 128) qui est réalisé séparément et pourvu d'une ouverture de diaphragme (14 ; 130), et
- l'agencement du dispositif formant diaphragme (12 ; 128) sur le support (2 ; 104) de telle manière que le dispositif formant diaphragme se trouve à distance de l'émetteur et que l'ouverture de diaphragme (14 ; 130) est disposée dans la trajectoire du rayonnement (8) émis par l'émetteur pour générer un rayon de mesure dirigé sur le récepteur (6 ; 108).

6. Procédé pour fabriquer un capteur de mesure de transmission d'un fluide à l'intérieur d'une machine à laver ou d'un lave-vaisselle, comportant les étapes suivantes :
- la mise à disposition d'un support (2 ; 104), sur lequel sont fixés un émetteur (4 ; 106) destiné à émettre un rayonnement (8) et un récepteur (6 ; 108) destiné à recevoir un rayonnement généré par l'émetteur, le support (2 ; 104) présentant un premier bras (22 ; 114), sur lequel est fixé l'émetteur (4 ; 106), et un deuxième bras (24 ; 116), sur lequel le récepteur (6 ; 108) est disposé face à l'émetteur (4 ; 106),
- la mise à disposition d'un dispositif formant diaphragme (12 ; 128) qui est réalisé séparément et pourvu d'une ouverture de diaphragme (16 ; 132), et
- l'agencement du dispositif formant diaphragme (12 ; 128) sur le support (2 ; 104) de telle manière que le dispositif formant diaphragme se trouve à distance du récepteur et que l'ouverture de diaphragme (16 ; 132) est disposée dans la trajectoire du rayonnement (8) émis par l'émetteur pour générer un rayon de réception dirigé sur le récepteur (6 ; 108).

7. Procédé pour fabriquer un capteur de mesure de transmission d'un fluide à l'intérieur d'une machine à laver ou d'un lave-vaisselle, comportant les étapes suivantes :
- la mise à disposition d'un support (2 ; 104), sur lequel sont fixés un émetteur (4 ; 106) destiné à émettre un rayonnement (8) et un récepteur (6 ; 108) destiné à recevoir un rayonnement généré par l'émetteur, le support (2 ; 104) présentant un premier bras (22 ; 114), sur lequel est fixé l'émetteur (4 ; 106), et un deuxième bras (24 ; 116), sur lequel le récepteur (6 ; 108) est disposé face à l'émetteur (4 ; 106),
- la mise à disposition d'un dispositif formant diaphragme (12 ; 128) qui est réalisé séparément et pourvu d'une ouverture de diaphragme (14 ; 118) ainsi que d'une ouverture de diaphragme supplémentaire (16 ; 128), et
- l'agencement du dispositif formant diaphragme (12 ; 128) sur le support (2 ; 104) de telle manière que le dispositif formant diaphragme est disposé à distance de l'émetteur (4 ; 106) et du récepteur (6 ; 108), que l'ouverture de diaphragme (14 ; 118) est disposée dans la trajectoire du rayonnement émis par l'émetteur pour générer un rayon de mesure et que l'ouverture de diaphragme supplémentaire (16 ; 132) est disposée dans la trajectoire du rayon de mesure pour générer un rayon de réception dirigé sur le récepteur (6 ; 108).
